(19) Europäisches Patentamt / European Patent Office / Office européen des brevets

(11) **EP 4 692 880 A2**

(12) **EUROPEAN PATENT APPLICATION**
published in accordance with Art. 153(4) EPC

(43) Date of publication:
**11.02.2026 Bulletin 2026/07**

(21) Application number: **24785186.8**

(22) Date of filing: **03.04.2024**

(51) International Patent Classification (IPC):
**G02B 6/44** (2006.01)   **G02B 6/38** (2006.01)

(52) Cooperative Patent Classification (CPC):
**G02B 6/38; G02B 6/44**

(86) International application number:
**PCT/KR2024/004278**

(87) International publication number:
**WO 2024/210481 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 KR 20230045540**
**02.04.2024 KR 20240044451**

(71) Applicant: **LS Cable & System Ltd.**
**Anyang-si, Gyeonggi-do 14119 (KR)**

(72) Inventor: **YUN, Hui Jeong**
**Gyeongsangbuk-do 39460 (KR)**

(74) Representative: **K&L Gates LLP**
**Karolinen Karree**
**Karlstraße 12**
**80333 München (DE)**

(54) **ROLLABLE OPTICAL FIBER RIBBON AND OPTICAL CABLE COMPRISING SAME**

(57) The present invention relates to a rollable optical fiber ribbon configured such that a coloring layer is provided on the outermost layer of each optical fiber, enabling easy distinction between an optical fiber ribbon and individual optical fibers through diverse colors, sufficient bonding strength is maintained between an optical fiber and a bond region to allow rolling in a width direction, and damage to the coloring layer of the optical fiber due to the bond region is prevented during an optical fiber separation process and an optical cable including the same.

【FIG. 1】

EP 4 692 880 A2

## Description

### [Technical Field]

The present invention relates to a rollable optical fiber ribbon and an optical cable including the same. More particularly, the present invention relates to a rollable optical fiber ribbon configured such that a coloring layer is provided on the outermost layer of each optical fiber, enabling easy distinction between an optical fiber ribbon and individual optical fibers through diverse colors, sufficient bonding strength is maintained between an optical fiber and a bond region to allow rolling in a width direction, and damage to the coloring layer of the optical fiber due to the bond region is prevented during an optical fiber separation process and an optical cable including the same.

### [Background Art]

Recently, demand for ultra-high-speed communications has increased, leading to a continuous rise in demand for optical cable-based communication networks. Optical cables offer high bandwidth and are lightweight and compact, making the same advantageous for constructing ultra-high-speed transmission networks.

In order to build large-capacity optical communication networks, an optical cable including a plurality of optical fiber ribbons, each of which includes a plurality of optical fibers bonded side by side and gathered in an outer jacket or a tube of the optical cable, is used. In particular, the use of a high-density optical cable including a rollable ribbon having a structure enabling lateral rolling by bonding adjacent optical fibers, among a plurality of optical fibers, to each other via bond regions intermittently disposed in a longitudinal direction is increasing.

Here, optical fiber ribbons and individual optical fibers constituting the optical cable must be distinguished from one another, and in order to distinguish the optical fiber ribbons and the individual optical fibers from one another, various colors may be applied to a surface of the outermost layer of each optical fiber through a coloring layer, allowing the optical fiber ribbons and the individual optical fibers to be externally distinguished from one another.

Meanwhile, for an optical fiber constituting a general optical fiber ribbon having bond regions continuously surrounded in the optical fiber length direction, a surface of the optical fiber must be smooth for medium stabilization, whereas an optical fiber constituting a rollable optical fiber ribbon having bond regions intermittently disposed in an optical fiber length direction has a smaller bonding area with the bond regions than the optical fiber of the general optical fiber ribbon, and therefore higher bonding strength per unit area between the optical fiber and the bond region is required than the general optical fiber ribbon to prevent undesired separation between the optical fiber and the bond region.

Furthermore, in order to maintain the shape of the rollable optical fiber ribbon during rolling in a width direction, the optical fibers must remain bonded to each other at the bond region, and at the same time the separation of the optical fibers must be facilitated when it is necessary to separate the mutually bonded optical fibers during a connection process of the optical fiber ribbon. Moreover, damage to a surface layer of the optical fiber during the optical fiber separation process must be prevented.

Generally, the bonding strength may be adjusted by adjusting the physical properties of the bond region that constitutes the rollable optical fiber ribbon. However, if viscosity increases during the process of adjusting the physical properties of the bond region, it is difficult to uniformly spray a bonding material through an equipment nozzle, degrading an optical fiber ribbon production process, and an excessive viscosity increase may cause the coloring layer of the optical fiber to be broken or damaged by the bond region during the optical fiber separation process.

On the other hand, if viscosity falls below a certain level during adjustment of the physical properties of the bond region, the bond region is deformed and the shear strength of the bond region is reduced by a thixotropic phenomenon, resulting in insufficient bonding strength between the bond region and the coloring layer of the optical fiber.

Therefore, there is a significant demand for a rollable optical fiber ribbon configured such that a coloring layer is provided on the outermost layer of each optical fiber, enabling easy distinction between an optical fiber ribbon and individual optical fibers through diverse colors, sufficient bonding strength is maintained between an optical fiber and a bond region to allow rolling in a width direction, and damage to the coloring layer of the optical fiber due to the bond region is prevented during an optical fiber separation process.

### [Disclosure]

### [Technical Problem]

It is an object of the present invention to provide a rollable optical fiber ribbon configured such that a coloring layer is provided on the outermost layer of each optical fiber, enabling easy distinction between an optical fiber ribbon and individual optical fibers through diverse colors, sufficient bonding strength is maintained between an optical fiber and a bond region to allow rolling in a width direction, and damage to the coloring layer of the optical fiber due to the bond region is prevented during an optical fiber separation process and an optical cable including the same.

**[Technical Solution]**

To achieve the aforementioned objects, there is provided a rollable optical fiber ribbon comprising: a plurality of optical fibers disposed parallel to each other in a longitudinal direction, each optical fiber comprising a core, a cladding layer surrounding the core, a coating layer surrounding the cladding layer, and a coloring layer surrounding the coating layer; and a plurality of bond regions configured to bond a pair of adjacent optical fibers, among the plurality of optical fibers, wherein the bond regions are intermittently disposed in a longitudinal direction of the optical fiber, the bond regions are disposed in some regions in a circumferential direction of the optical fiber, and an arithmetic average roughness (Ra) of a surface of the coloring layer according to JIS B0601 standards is 0.15 micrometers ($\mu$m) to 0.48 micrometers ($\mu$m).

Here, an outer diameter of the cladding layer may be 80 micrometers ($\mu$m) to 125 micrometers ($\mu$m), and a thickness of the coloring layer may be 3.0 micrometers ($\mu$m) to 10.0 micrometers ($\mu$m).

In addition, the bond region may be formed by applying a bonding resin to a surface of the coloring layer of the optical fiber and UV-curing the resin.

In addition, one or more bond regions have a density in the range of 0.8 g/cm3 to 1.4 g/cm3, a tensile strength in the range of 2.0 MPa to 22 MPa, an elongation in the range of 40% to 210%, a secant modulus in the range of 5 MPa to 90 MPa at a strain of 2.5%, and a viscosity in the range of 80 mPa·s to 800 mPa·s at 25°C.

There is provided an optical cable including the rollable optical fiber ribbon, the optical cable comprising: an optical unit comprising a plurality of rollable optical fiber ribbons and a first assembly member configured to accommodate the plurality of rollable optical fiber ribbons; a cable core comprising at least one optical unit; and an outer jacket surrounding the cable core.

Here, the cable core may be formed by gathering a plurality of optical units.

In addition, the optical cable may comprise a second assembly member surrounding an outer circumference of the cable core.

In addition, the optical cable may comprise at least one notch disposed in an inner surface region of the outer jacket; and an identification means configured to enable identification of a position of the notch.

Here, a rib-cord may be accommodated inside the notch.

Further, the optical cable may comprise at least one pair of tension members embedded in the outer jacket in a longitudinal direction of the optical cable; and an identification means configured to enable identification of a position of the tension member.

There is provided a method of manufacturing an optical fiber for a rollable optical fiber ribbon comprising a plurality of optical fibers and a plurality of bond regions intermittently disposed in a longitudinal direction of the optical fiber, the method comprising: drawing a bare optical fiber comprising a core and a clad surrounding the core from a preform; applying a coating material to the bare optical fiber to form a coating layer; applying a coloring material after the step of applying the coating material; and UV-curing at least one of the coating material and the coloring material, wherein the coloring material comprises a resin mixed with coloring pigment particles, and an atmosphere in the step of forming the coloring layer has an oxygen concentration of more than 3,500 ppm and less than 20,000 ppm.

In addition, the method may further comprise UV-curing the coating material after the step of applying the coating material.

In addition, a volume ratio of oxygen to nitrogen in an atmosphere in the step of forming the coloring layer may be 1:4 to 1:9.

In addition, an optical fiber drawing speed during UV curing may be 1000 mpm to 2100 mpm, a curing time may be 0.03 seconds to 0.1 seconds, and a curing degree of the coloring layer may be 80% to 95%.

Here, the coating layer may comprise a first coating layer surrounding the bare optical fiber in contact therewith and a second coating layer surrounding the first coating layer in contact therewith, and a modulus of the first coating layer may be lower than a modulus of the second coating layer.

**[Advantageous Effects]**

In a rollable optical fiber ribbon according to the present invention and an optical cable including the same, a coloring layer is provided on the outermost layer of each optical fiber constituting the optical fiber ribbon, whereby distinguishment between the optical fiber ribbon and individual optical fibers is possible, and the concentration of oxygen is adjusted during a coloring process for each optical fiber such that the surface roughness of the coloring layer of the optical fiber is 0.15 micrometers ($\mu$m) to 0.48 micrometers ($\mu$m), whereby it is possible to secure optimal bonding strength between the optical fiber and the bond region.

**[Description of Drawings]**

FIG. 1 shows an embodiment of a rollable optical fiber ribbon according to the present invention in a rolled state.

FIG. 2 is a plan view of the embodiment of the rollable optical fiber ribbon according to the present invention.

FIG. 3 is an enlarged sectional view of the embodiment of the rollable optical fiber ribbon according to the present invention.

FIG. 4 is an enlarged sectional view of another embodiment of the rollable optical fiber ribbon according to the present invention.

FIG. 5 is an enlarged sectional view of yet another embodiment of the rollable optical fiber ribbon according to the present invention.

FIG. 6 shows a separation strength measurement apparatus for measuring vertical separation strength at a bond region of the rollable optical fiber ribbon according to the present invention.

FIG. 7 shows a separation strength measurement apparatus for measuring horizontal separation strength at the bond region of the rollable optical fiber ribbon according to the present invention.

FIG. 8 shows a state in which an optical fiber coloring layer is damaged in the rollable optical fiber ribbon according to the present invention.

FIG. 9 is a sectional view of an embodiment of an optical cable including the rollable optical fiber ribbon according to the present invention.

**[Best Mode]**

Hereinafter, preferred embodiments of the present invention will be described in detail with reference to the accompanying drawings. However, the present invention is not limited to the embodiments described herein, and may be embodied in various different forms. Rather, these embodiments are provided such that the present invention will be thorough and complete, and will fully convey the scope of the present invention to those skilled in the art. The same reference numbers denote the same elements throughout the specification.

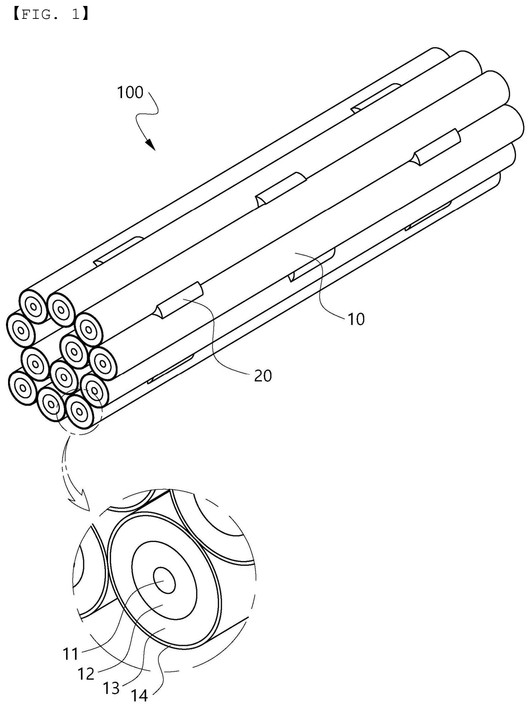

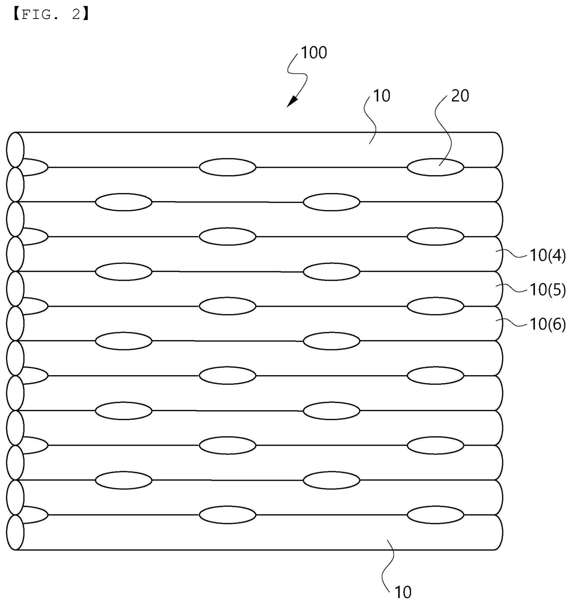

FIG. 1 shows an embodiment of a rollable optical fiber ribbon 100 according to the present invention in a rolled state, and FIG. 2 is a plan view of the embodiment of the rollable optical fiber ribbon according to the present invention.

The rollable optical fiber ribbon 100 according to the present invention is constituted by a plurality of optical fibers 10 bonded to each other side by side, wherein a pair of adjacent optical fibers 10, among the plurality of optical fibers 10, may be bonded to each other via a plurality of bond regions 20 intermittently disposed in an optical fiber length direction.

Examining the sectional structure of each of the plurality of optical fibers 10 constituting the rollable optical fiber ribbon 100 according to the present invention with reference to FIG. 1, each of the optical fibers 10 may include a core 11, a cladding layer 12, a coating layer 13, and a coloring layer 14.

The core 11 may be made of glass or a synthetic resin material and transmits light. The cladding layer 12 may be formed so as to surround the core 11.

The cladding layer 12 is made of silica-based glass or a synthetic resin, etc., with a lower refractive index than the core 11 and causes total reflection of light passing through the center of the optical fiber, thereby performing the role of transmitting a signal.

The coating layer 13 may be formed by coating a surface of the cladding layer 12 with a material including at least one of acrylate, polyimide, and carbon. The coating layer 13 is configured to directly surround the cladding layer 12, serving to absorb external impact transmitted to the cladding layer 12. The coating layer 13 may be constituted by a plurality of layers with different physical properties, such as modulus, to safeguard internal components.

The coloring layer 14 is formed by applying a material including a coloring agent, such as a colored or colorless pigment, applied to a surface of the coating layer 13 to impart a color to the optical fiber 10, enabling distinguishment from other optical fibers through colors.

The rollable optical fiber ribbon 100 according to the present invention is configured to be rolled in a width direction, and each optical fiber 10 constituting the rollable optical fiber ribbon 100 has a coloring layer 14 on the outermost layer thereof, enabling mutual differentiation between optical fibers 10.

As shown in FIG. 2, the rollable optical fiber ribbon 100 according to the present invention is constituted by bonding a plurality of optical fibers 10 disposed side by side in a longitudinal direction, wherein each pair of adjacent optical fibers 10, among the plurality of optical fibers 10, may be bonded to each other via a plurality of bond regions 20 intermittently disposed in the optical fiber length direction. Here, the bond regions 20 may be a group of a plurality of bonding elements (not shown) spaced apart from each other.

The rollable optical fiber ribbon 100 may include a plurality of non-bond regions where not all optical fibers 10 are bonded to each other in a longitudinal section of the optical fiber.

The rollable optical fiber ribbon 100 may be constituted by bonding each pair of adjacent optical fibers 10, among a plurality of optical fibers disposed side by side in the longitudinal direction.

In the rollable optical fiber ribbon 100 according to the present invention, a pair of adjacent optical fibers 10, among the plurality of optical fibers 10, is bonded to each other via a plurality of bond regions 20 intermittently disposed in the longitudinal direction of the optical fiber, whereby the plurality of optical fibers 10 of the optical fiber ribbon 100 remains bonded to each other at the bond regions 20 and remains not bonded to each other in the remaining areas excluding the bond regions 20, enabling rolling in the width direction, and therefore the optical fiber ribbon 100 may be efficiently accommodated in an internal space of an optical cable.

As such, the optical fibers 10 constituting the rollable optical fiber ribbon 100 according to the present invention must be bonded to each other at the bond regions 20 by sufficient bonding force, and at the same time, the pair of optical fibers 10 bonded to each other via the bond regions 20 must be smoothly separated from each other without damage when separating each optical fiber 10 from the optical fiber ribbon 100 during branching of the optical fiber ribbon, and when separating an optical fiber provided with a coloring layer, damage to the coloring layer must be prevented.

Meanwhile, for an optical fiber constituting a general optical fiber ribbon having no width-direction rolling function and having bond regions continuously surrounded in the optical fiber length direction, a surface of the optical fiber must be smooth for medium stabilization, whereas an optical fiber 10 constituting a rollable optical fiber ribbon 100 with a coloring layer as in the present invention has a smaller bonding area with the bond regions 20 than the optical fiber of the general optical fiber ribbon, and therefore the surface of the optical fiber 10 may be formed relatively rough to enhance the bonding strength by increasing the bonding area between the optical fiber 10 and the bond regions 20.

However, even when constituting a rollable optical fiber ribbon 100 using an optical fiber with a coloring layer as in the present invention, if the surface of the optical fiber 10 is formed too rough, causing the bonding strength to increase excessively, the coloring layer may be damaged during the process of separating individual optical fibers from the ribbon.

Therefore, the surface roughness of the optical fiber 10 must be limited to an appropriate range, and the surface roughness, i.e., the surface roughness of the coloring layer, must be controlled within an appropriate range as a measure of the surface roughness to ensure appropriate bonding strength between the bonded optical fibers.

Specifically, the surface roughness of the coloring layer 14 of each optical fiber 10 constituting the rollable optical fiber ribbon 100 according to the present invention may be 0.15 micrometers ($\mu$m) to 0.48 micrometers ($\mu$m).

Here, the surface roughness of the coloring layer 14 of the optical fiber 10 refers to the arithmetic average roughness (Ra) as defined by the JIS B0601:2001 (ISO 4287:1997) standards.

If the arithmetic average roughness (Ra) of the surface of the coloring layer 14 of the optical fiber 10 is less than 0.15 micrometers ($\mu$m), the bonding area between the optical fiber 10 and the bond region 20 decreases, making it impossible to maintain a sufficient bonding state between the optical fiber 10 and the bond region 20, whereas if the surface roughness of the coloring layer 14 exceeds 0.48 micrometers ($\mu$m), the bonding area between the optical fiber 10 and the bond region 20 increases, causing the bonding force to become excessively high, which may damage the optical fiber 10 during the separation process of the optical fiber 10, degrading the optical transmission characteristics of the optical fiber 10.

That is, in the rollable optical fiber ribbon 100 according to the present invention, the arithmetic average roughness (Ra) of the surface of the coloring layer 14 of the optical fiber 10 is adjusted to the aforementioned range, thereby ensuring that the optical fibers 10 are bonded to each other with sufficient bonding strength at each bond region 20 of the optical fiber ribbon 100 while simultaneously preventing damage to the optical fiber 10 during the separation process of the optical fiber.

The bond region 20 of the rollable optical fiber ribbon 100 according to the present invention may be formed by UV curing or laser sintering various kinds of resins such as a UV-curable resin or laser-sinterable powder, and the amounts of the resins constituting the bond regions 20 may be almost equal to each other.

In order to allow the optical fiber ribbon 100 to roll while ensuring that the bond region 20 can be clearly separated when the bonded optical fibers 10 are separated from each other, the elongation of the cured or sintered resin of the bond region 20 may be 40% to 210%, preferably 85% to 190%, and the density of the cured or sintered resin may be 0.8 g/cm$^3$ to 1.4 g/cm$^3$, preferably 1.0 g/cm$^3$ to 1.2 g/cm$^3$.

Furthermore, in order to enable rolling or maintaining a rolled state of the rollable optical fiber ribbon 100 in the width direction, the secant modulus of the bond region 20 may be 5 MPa to 90 MPa, preferably 5 MPa to 74 MPa, at a strain of 2.5%.

Furthermore, in order to form the plurality of bond regions 20 intermittently disposed in the longitudinal direction of the optical fiber 10, the resin, etc., must be applied accurately and rapidly while possessing suitable flowability to prevent dripping before curing or sintering, and therefore the viscosity of the bond region 20 may be 80 mPa·s to 800 mPa·s, preferably 90 mPa·s to 520 mPa·s, at 30°C.

Furthermore, since the plurality of bond regions 20 must possess sufficient stress to maintain excellent bonding strength of the bond region 20 even after curing or sintering while simultaneously preventing cracking or fracture of the bond region 20 due to external impact, the tensile strength of the bond region 20 may be 2.0 MPa to 22 MPa, preferably 5 MPa to 18 MPa.

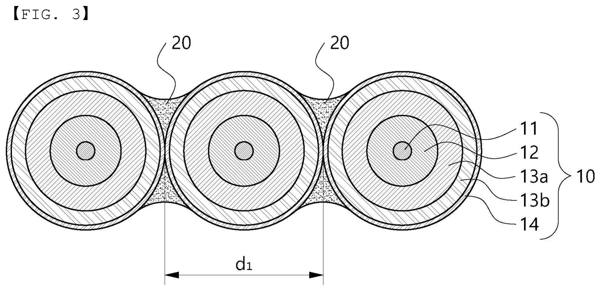

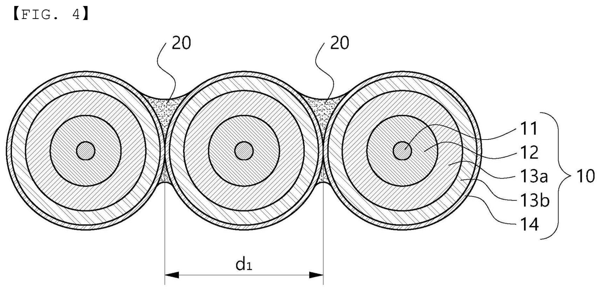

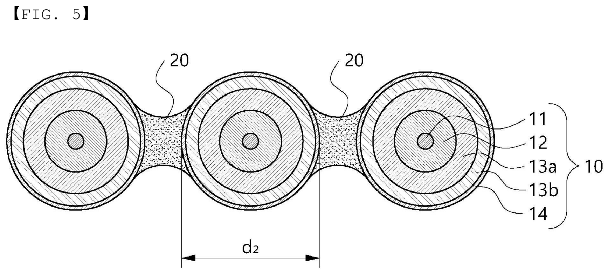

FIG. 3 is an enlarged sectional view of the embodiment of the rollable optical fiber ribbon according to the present invention, FIG. 4 is an enlarged sectional view of another embodiment of the rollable optical fiber ribbon according to the present invention, and FIG. 5 is an enlarged sectional view of yet another embodiment of the rollable optical fiber ribbon according to the present invention.

The optical fiber ribbon 100 shown in FIGs. 3 and 4 is configured by 12 general optical fibers 10 bonded to each other, and in order to satisfy a width of 3.22 mm (3,220 μm), which is the width (w) limitation of a 12-core optical fiber ribbon 100 as defined by IEC standards or ANSI/ICEA standards related to fiber ribbons or optical cables, most adjacent general optical fibers 10 having diameters d1 of 230 μm to 270 μm in the optical fiber ribbon 100 may be bonded to each other in a circumscribed state.

That is, since the sum of the diameters d1 of 12 optical fibers 10 each having a diameter of 250 μm is 3,000 μm, even if the optical fibers 10 are bonded to each other in the state in which some of the optical fibers are spaced apart from each other (see FIG. 5), the bond regions 20 are formed in the state in which most optical fibers 10 are bonded to each other in a circumscribed state, and the optical fibers 10 may be bonded to each other via each bond region 20 disposed in a circumferential direction over a part of the section of each fiber in a pair of adjacent optical fibers.

In the embodiment shown in FIG. 4, the amount of the resin disposed on one side of the optical fiber ribbon, e.g., the lower side of the optical fiber ribbon, at the bond region 20 of the optical fiber ribbon is less than the amount of the resin disposed on the other side of the optical fiber ribbon, e.g., the upper side of the optical fiber ribbon.

In addition, although not meeting IEC or ANSI/ICEA standards, small-diameter optical fibers 10 each having a diameter d1 of 160 μm to less than 230 μm, which constitute the optical fiber ribbon 100, may be disposed in a circumscribed state, as shown in FIGs. 3 and 4.

As shown in FIG. 4, even when the amount of the resin applied to the bond region 20 on one side of the optical fiber ribbon is approximately 50% or less of the amount of the resin applied to the bond region 20 on the other side of the optical fiber ribbon, instead of the resin being applied to the bond regions 20 on both sides of the optical fiber ribbon in equal amount, the optical fiber ribbon 100 exhibits excellent unidirectional rolling characteristics during rolling, while reducing the overall amount of the resin used.

On the other hand, the optical fiber ribbon 100 shown in FIG. 5 is constituted by 12 small-diameter optical fibers 10, each of which has a diameter d2 of 220 μm, being bonded to each other, wherein the sum of the diameters d2 of the optical fibers 10 is only up to 2,640 μm, which is less than 3.22 mm (3,220 μm), which is the width limitation of the 12-core optical fiber ribbon 100.

When forming the optical fiber ribbon 100 by discontinuously bonding the optical fibers 10 to each other, forming the bond region 20 by bonding the optical fibers 10 to each other using a resin in the state in which the optical fibers 10 are spaced apart from each other, as shown in FIG. 5, may provide higher bonding performance than when the optical fibers 10 are bonded to each other in a circumscribed state.

That is, when the optical fiber ribbon 100 is constituted by bonding 12 small-diameter optical fibers 10, the bond regions 20 may be formed in the state in which most of the optical fibers 10 are spaced apart from each other, whereby the optical fibers may be bonded to each other via the bond regions 20.

In addition, the present invention may provide a method of manufacturing an optical fiber 10 for rollable optical fiber ribbons 100. The optical fiber 10 constituting the rollable optical fiber ribbon 100 according to the present invention may be manufactured by performing a step of drawing a bare optical fiber including a core 11 and a cladding layer 12 surrounding the core 11 from a preform, a step of applying a coating material to the bare optical fiber to form a coating layer 13, a step of performing the steps of applying a coloring material to the coating layer 13 to form a coloring layer 14, and a step of UV-curing at least one of the coating material and the coloring material.

Each of a plurality of optical fibers 10 constituting the rollable optical fiber ribbon 100 according to the present invention may include a core 11, a cladding layer 12, a coating layer 13, and a coloring layer 14 formed through the above manufacturing method.

Herein, the coating layer 13 may include one or more layers. Preferably, the coating layer 13 may include a first coating layer 13a and a second coating layer 13b. The first coating layer 13a directly surrounds the cladding layer 12, and therefore the first coating layer may be made of a material having a relatively low modulus in order to absorb external impact transmitted to the cladding layer 12, whereas the second coating layer 13b may be made of a material having a relatively high modulus in order to mitigate external impact. The coating layer may include an additional coating layer configured to protect the core 11 and the cladding layer 12 in addition to the first coating layer 13a and the second coating layer 13b.

The coloring layer 14 is formed by coating so as to surround the coating layer 13. The coloring layer 14 may be made of a mixture of a coloring agent and a resin in order to impart a color to the optical fiber 10. Preferably, the coloring layer 14 may be made of coloring pigment particles and a resin containing a certain concentration of oxygen.

The coloring layer 14 may be formed on the outermost surface of the optical fiber 10 through a coloring process of UV-curing a UV-curable resin mixed with coloring pigment particles under a process atmosphere containing oxygen and nitrogen after applying the resin to a surface of the cured or uncured coating layer 13.

In each optical fiber 10 constituting the rollable optical fiber ribbon 100 according to the embodiment of the present invention, the outer diameter of the optical fiber excluding the coating layer 13 and the coloring layer 14, i.e., the outer diameter of the cladding layer, may be 80 micrometers ($\mu$m) to 125 micrometers ($\mu$m). The thickness of the coating layer 13 may be determined according to the purpose.

In addition, the thickness of the coloring layer 14 on each optical fiber 10 may be 3.0 micrometers ($\mu$m) to 10.0 micrometers ($\mu$m). If the thickness of the coloring layer 14 is less than 3.0 micrometers ($\mu$m), identifiability of the optical fiber 10 may be reduced. On the other hand, if the thickness of the coloring layer 14 exceeds 10.0 micrometers ($\mu$m), the cost of the coloring process for the optical fiber unnecessarily increases.

Meanwhile, conventionally, in order to adjust the bonding strength of the rollable optical fiber ribbon 100, physical properties of the bond region 20, such as viscosity (mPa·s), elongation (%), elastic modulus (MPa), and tensile strength (MPa), are adjusted. However, relying solely on adjusting the physical properties of the bond region 20 in order to adjust the bonding strength makes spraying of the bond region resin difficult in the production process of the rollable optical fiber ribbon 100, leading to reduced productivity and shape distortion of the bond region 20 or quality decrease of the bond region 20.

Therefore, in addition to adjusting the physical properties of the bond region 20 of the rollable optical fiber ribbon 100 according to the present invention, process variables may be adjusted in the process of forming the coloring layer 14 on the outermost layer of the optical fiber 10, i.e., the coloring process, in the step forming the coloring layer of the method of manufacturing the optical fiber for rollable optical fiber ribbons to control the arithmetic average roughness (Ra) of the surface of the coloring layer 14 of the optical fiber 10 to a range of 0.15 micrometers ($\mu$m) to 0.48 micrometers ($\mu$m), which enables adjustment of the contact area between the optical fiber 10 and the bond region 20, thereby securing an optimal bonding strength.

The coloring process of the optical fiber 10 includes a process of applying a resin containing coloring pigment particles to an outer surface of the protective layer 13 of the drawn optical fiber 10 and a process of UV-curing the applied resin in an ultraviolet (UV) curing apparatus where a coloring process atmosphere is formed to form the coloring layer.

In the coloring process of the optical fiber 10, the UV curing process may include an optical fiber surface curing process of determining the surface roughness of the coloring layer 14 of the optical fiber 10 and an optical fiber internal curing process of determining the bonding strength between the protective layer 13 and the coloring layer 14 in the optical fiber 10. Here, the optical fiber surface curing process and the optical fiber internal curing process may be performed in batch.

Specifically, during the coloring process of each optical fiber 10 of the rollable optical fiber ribbon 100 according to the present invention, the process atmosphere may contain oxygen ($O_2$) and nitrogen ($N_2$).

Here, as the concentration of oxygen ($O_2$) increases, the surface roughness of the optical fiber 10 formed after the coloring process may increase, whereas as the concentration of nitrogen ($N_2$) increases, the surface roughness of the optical fiber 10 formed after the coloring process may decrease.

The process atmosphere during the coloring process of each optical fiber 10 of the rollable optical fiber ribbon 100 according to the present invention may have a volume ratio of oxygen ($O_2$) to nitrogen ($N_2$) of 1:4 to 1:9. For a general optical fiber ribbon, the oxygen ($O_2$) content in the coloring process atmosphere is minimized to form the smoothest possible surface on the optical fiber. However, in the rollable optical fiber ribbon 100 according to the present invention, the volume of oxygen ($O_2$) in the coloring process atmosphere may be approximately 10% to 25% of the volume of nitrogen ($N_2$), thereby enabling the surface of the coloring layer 14 of the optical fiber 10 to be formed relatively rough.

In addition, during the coloring process of each of the optical fibers 10, the coloring process atmosphere may be configured such that the concentration of oxygen ($O_2$) calculated by [Equation 1] below is more than 3,500 ppm and less than 20,000 ppm.

[Equation 1] Oxygen concentration (ppm) = Dwell time (s) $\times$ Compressed air volume (L/s) $\times$ 0.21 (Oxygen ratio in air)  [Equation 1]

In [Equation 1] above, the dwell time (s) represents the length (m) of each bond region 20 divided by the optical fiber line speed (mps).

Thus, when the concentration of oxygen ($O_2$) in the coloring process atmosphere is more than 3,500 ppm and less than 20,000 ppm, the arithmetic average roughness (Ra) of the surface of the coloring layer 14 of the optical fiber 10 formed therefrom may be 0.15 micrometers ($\mu$m) to 0.48 micrometers ($\mu$m), thereby achieving optimal bonding strength.

If the concentration of oxygen ($O_2$) is 3,500 ppm or less, the arithmetic average roughness (Ra) of the surface of the coloring layer 14 of the optical fiber 10 after the coloring process may not be sufficiently high, resulting in insufficient bonding strength between the optical fiber 10 and the bond region 20. On the other hand, if the concentration of oxygen ($O_2$) is 20,000 ppm or higher, the bonding strength between the optical fiber 10 and the bond region 20 may excessively increase, which may cause the bonding strength between the coloring layer 14 and the bond region 20 to become higher than the bonding strength between the protective layer 13 and the coloring layer 14 in the optical fiber 10, and therefore there is a risk that the coloring layer 14 may be torn or damaged by the bond region 20 during separation of the optical fiber 10.

In addition, during the coloring process of each optical fiber 10 of the rollable optical fiber ribbon 100 according to the present invention, the surface roughness of the coloring layer 14 of the optical fiber 10 may be adjusted by controlling UV curing process variables.

Specifically, during the coloring process of each optical fiber 10 of the rollable optical fiber ribbon 100 according to the present invention, under the process atmosphere in which the concentration of oxygen ($O_2$) in the ultraviolet curing apparatus during UV curing is more than 3,500 ppm and less than 20,000 ppm, the drawing speed of the optical fiber 10 may be adjusted to 1,000 mpm to 2,100 mpm (meters per minute), the UV curing time may be adjusted to 0.03 seconds to 0.1 seconds, and the curing degree of the coloring layer 14 may be adjusted to 80% to 95%, thereby smoothly controlling the arithmetic average roughness (Ra) of the coloring layer 14 within a range of 0.15 micrometers ($\mu$m) to 0.48 micrometers ($\mu$m).

Furthermore, in the rollable optical fiber ribbon 100 according to the present invention, the plurality of optical fibers 10 must remain bonded to each other at the bond regions 20, and at the same time, the pair of optical fibers 10 bonded to each other via the bond regions 20 must be smoothly separated from each other without damage when separating each optical fiber 10 from the optical fiber ribbon during branching of the optical fiber ribbon, wherein the vertical separation strength may be measured as a metric for judging ease of separation.

The rollable optical fiber ribbon 100 according to the present invention may be configured such that the vertical separation strength at each of the bond regions 20 is less than 20 gf, thereby facilitating the separation of core fibers of a pair of optical fibers 10 in a vertical direction. In this case, an increase in optical loss and damage to the coloring layer 14 of the optical fiber 10 during the separation process of the optical fiber 10 may be minimized.

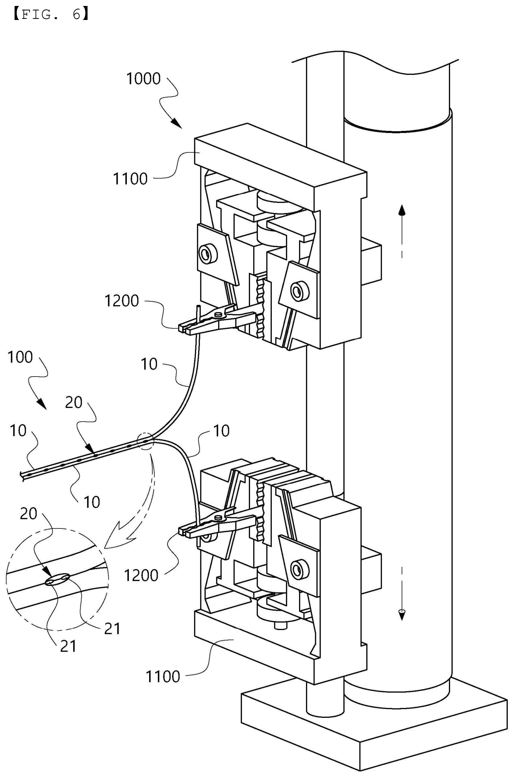

FIG. 6 shows a separation strength measurement apparatus for measuring the vertical separation strength at the bond region of the rollable optical fiber ribbon according to the present invention.

FIG. 6 shows the measurement of the separation strength in the direction perpendicular to the optical fiber length direction at each of the plurality of bond regions 20 of the optical fiber ribbon 100 according to the present invention. For vertical separation strength measurement, after branching the ends of a pair of optical fibers 10 bonded by the plurality of bond regions 20 intermittently disposed in the optical fiber ribbon 100 in the optical fiber length direction, ends of the branched pair of optical fibers spaced apart from the bond region 20 by a length of 10 cm are fixed to gripping portions 1200 provided on a pair of mounts 1100 capable of being transported in opposite directions of the separation strength measurement apparatus 1000, and each optical fiber of the pair of optical fibers 10 fixed to the pair of gripping portions 1200 is pulled at a speed of approximately 500 mm/min in opposite directions to measure the separation strength at each bond region 20 during the process of separating the pair of optical fibers 10.

Specifically, the separation strength measurement apparatus 1000 may measure the magnitude of the separation force required to separate one bond region 20, i.e., the vertical separation strength T at one bond region 20, using a sensor such as a load cell during the process in which the pair of bonded optical fibers 10 constituting the optical fiber ribbon 100 is divided and separated in the vertical direction.

In the rollable optical fiber ribbon 100 according to the present invention, the horizontal separation strength, which is the separation force required at the bond region 20 to completely fracture, in the longitudinal direction, a pair of optical fibers 10 disposed adjacent to each other in a direction parallel to the longitudinal direction of the optical fiber 10, may be adjusted. The horizontal separation strength of the bond region 20 is proportional to the bonding strength of the bond region 20.

In a process of manufacturing a multi-core optical cable including the rollable optical fiber ribbon 100 according to the present invention, various manufacturing processes in which the plurality of optical fibers 10 constituting the optical fiber ribbon 100 is pulled by mechanical external force in the longitudinal direction of the optical cable or the optical fiber 10, such as a tubing process, an assembly process, and a cabling process, are frequently performed, and in order to prevent the plurality of optical fibers 10 constituting the rollable optical fiber ribbon 100 from being separated from each other under undesirable conditions during the manufacturing processes, sufficiently high horizontal separation strength B is required at each of the bond regions 20.

Therefore, in order to prevent separation of the pair of optical fibers 10 of the rollable optical fiber ribbon 100 according to the present invention, the horizontal separation strength at each of the bond regions 20 may be 100 gf or more, in which case the separation phenomenon between individual optical fibers 10 during an optical cable manufacturing process may be prevented, ensuring process stability.

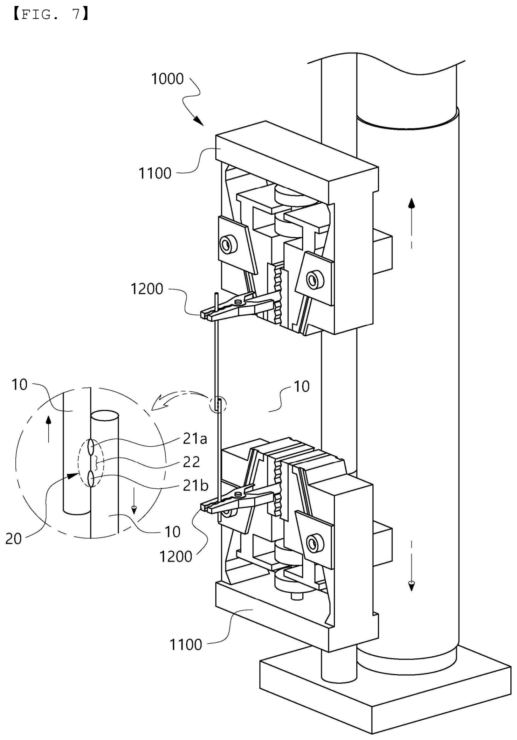

FIG. 7 shows a separation strength measurement apparatus for measuring the horizontal separation strength at the bond region of the rollable optical fiber ribbon according to the present invention.

FIG. 7 shows the measurement of the horizontal separation strength in the direction parallel to the optical fiber length direction at each of the plurality of bond regions 20 of the optical fiber ribbon 100 according to the present invention.

For horizontal separation strength measurement, a pair of optical fibers 10 of the plurality of optical fibers 10 constituting the optical fiber ribbon 100 that is bonded to each other via one bond region 20 is separated from the optical fiber ribbon 100, and the unnecessary core regions of the optical fibers are removed by cutting with one bond region 20 therebetween, as shown in the enlarged view of FIG. 7.

Subsequently, ends of the pair of optical fibers 10, located 10 cm away from the bond region 20, were fixed to respective gripping portions 1200 provided at the separation strength measurement apparatus 1000, and the horizontal separation strength B, which is the force required to break the single bond region 20 and separate the pair of optical fibers 10 from each other, during a process of pulling the pair of optical fibers 10 fixed to the pair of gripping portions 1200 at a speed of approximately 500 mm/min in the optical fiber length direction is measured.

The separation strength measurement apparatus 1000 for measuring the horizontal separation strength shown in FIG. 7 is shown as being identical to the separation strength measurement apparatus for measuring the vertical separation strength shown in FIG. 6; however, the present invention is not limited thereto, and various configurations of equipment capable of fixing the ends of the pair of optical fibers 10 and pulling the same side by side in the optical fiber length direction may be used.

[Example]

Specimens of a rollable optical fiber ribbon 100 having optical fiber surface roughness listed in Table 1 below were manufactured. Here, the surface roughness of each specimen was measured using a surface roughness measurement apparatus according to standard JIS B0601, wherein the arithmetic average roughness (Ra) of a coloring layer 14 provided on the outermost layer of an optical fiber 10 was measured using VK-X100, which is a shape measuring laser microscope from KEYENCE.

The horizontal separation strength B and vertical separation strength T of the rollable optical fiber ribbon specimens having optical fiber surface roughness (Ra) listed in Table 1 below were measured. The average of the peak separation strength values measured at four consecutive bond regions 20 constituting each specimen using the separation strength measurement apparatus 1000 and the separation strength measurement method was determined as the horizontal separation strength B and the vertical separation strength T of each specimen.

The horizontal separation strength B measured at each specimen was evaluated as "Pass" if greater than 100 gf and "Fail" if 100 gf or less, and the vertical separation strength T measured at each specimen was evaluated as "Pass" if less than 20 gf and "Fail" if 20 gf or more, which are listed in Table 1.

[Table 1]

| Specimen | 1 | 2 | 3 | 4 | 5 | 6 | 7 |
|---|---|---|---|---|---|---|---|
| Surface roughness (Ra) [μm] | 0.09 | 0.13 | 0.15 | 0.32 | 0.48 | 0.55 | 0.61 |
| Horizontal separation strength (B) [gf] | 64.51 | 93.13 | 120.16 | 319.24 | 527.84 | 609.45 | 651.35 |
|  | Fail | Fail | Pass | Pass | Pass | Pass | Pass |
| Vertical separation strength (T) [gf] | 4.30 | 5.79 | 6.17 | 8.15 | 16.19 | 22.89 | 27.72 |
|  | Pass | Pass | Pass | Pass | Pass | Fail | Fail |

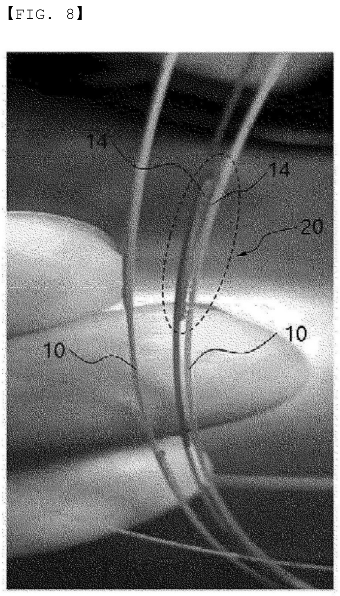

As shown in Table 1 above, Specimen 1 and Specimen 2 were found to have a surface roughness (Ra) of the coloring layer 14 of the optical fiber 10 formed to be less than 0.15 micrometers (μm), resulting in insufficient bonding strength between the optical fiber 10 and the bond region 20, whereby the horizontal separation strength was less than 100 gf, which is insufficient, and undesirable separation of the optical fiber 10 may occur. In addition, Specimen 6 and Specimen 7 were found to have a surface roughness (Ra) of the coloring layer 14 of the optical fiber 10 formed to exceed 0.48 micrometers (μm), causing the bonding strength between the optical fiber 10 and the bond region 20 to excessively increase, whereby the vertical separation strength T was increased to less than 20 gf, which caused damage to the coloring layer 14 of the optical fiber 10 during separation of the optical fiber. FIG. 8 shows the damaged coloring layer 14 during the branching operation of the optical fiber 10 in Specimen 7.

In contrast, Specimens 3 to 5 were found to have a surface roughness (Ra) of the coloring layer 14 of the optical fiber 10 between 0.15 micrometers (μm) and 0.48 micrometers (μm), by which the horizontal separation strength B and the vertical separation strength T were optimized, providing sufficient bonding strength between the optical fiber 10 and the bond region 20 while the optical fiber 10 could be easily branched during separation of the optical fiber 10 without damaging the coloring layer 14.

Furthermore, the present invention may further provide an optical cable 1000 including the rollable optical fiber ribbon 100.

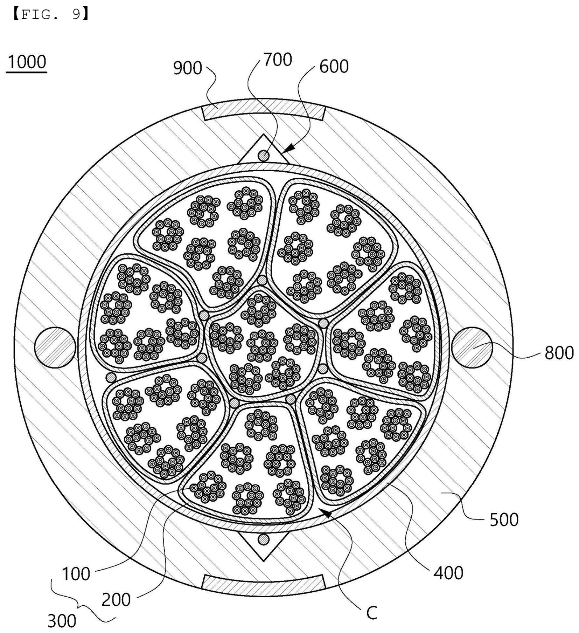

FIG. 9 is a sectional view of an embodiment of an optical cable 1000 including the rollable optical fiber ribbon 100 according to the present invention.

As shown in FIG. 9, the optical cable 1000 according to the present invention may include an optical unit 300 including a plurality of rolled optical fiber ribbons 100 formed by rolling the rollable optical fiber ribbon 100 having the aforementioned configuration in the width direction and a first assembly member 200 configured to accommodate the plurality of rolled optical fiber ribbons 100, a cable core C formed by gathering a plurality of optical units 300, and an outer jacket 500 surrounding the cable core C.

Here, as previously described, the surface roughness of the coloring layer 14 of the optical fiber 10 may be formed to be 0.15 micrometers ($\mu$m) to less than 0.48 micrometers ($\mu$m) such that the bonded state between adjacent optical fibers 10 is maintained even in a rolled state of each rollable optical fiber ribbon 100 and the optical fibers 10 can be smoothly separated from each other without damage to or breakage of the optical fibers during the branching operation of each rollable optical fiber ribbon 100 in the optical cable 1000.

In the embodiment shown in FIG. 9, the optical cable 1000 according to the present invention is configured such that six rolled optical fiber ribbons 100 forms one optical unit 300 and eight optical units 300 are gathered to form a cable core C of the optical cable 1000; however, the number of rollable optical fiber ribbons 100 constituting each optical unit 300 and the number of optical units 300 constituting the cable core C may be increased or decreased depending on the specifications required for the optical cable 1000, the overall outer diameter thereof, etc.

The first assembly member 200 constituting the optical unit 300 may be constituted by a loose tube, binder yarn, binder tape, etc., and is preferably constituted by a shape-variable loose tube, wherein the first assembly member 200 may protect the optical fibers 10 constituting the rollable optical fiber ribbon 100 from external impact and environmental conditions such as twisting, compression, and temperature changes. In addition, a waterproofing material, such as a jelly compound, waterproof powder, or waterproof yarn, may be included in an empty space in the first assembly member 200 constituting the optical unit 300.

The optical cable 1000 according to the present invention may include a second assembly member 400 provided on an outer circumference of the cable core C, and preferably, a waterproof tape layer may be transversely wound. The waterproof tape layer is made of a highly absorbent resin, etc., to protect the optical unit 300 and to perform a waterproof function of absorbing moisture permeating the optical cable 1000.

In addition, the optical cable 1000 according to the present invention may include at least one notch 600 provided inside the outer jacket 500, and when a plurality of notches 600 is provided, the notches may be located so as to be symmetrical to each other, wherein each of the notches 600 facilitates the removal of the outer jacket 500 during the branching operation of the optical fiber ribbon, thereby improving workability. Furthermore, a rip-cord 700 usable to remove the outer jacket 500 may be provided inside each of the notches 600.

In addition, the optical cable 1000 according to the present invention may include at least one pair of tension members 800 embedded in the outer jacket 500 in the longitudinal direction of the optical cable 1000, wherein the tension members 800 generate counter-tension when deformation such as bending is applied to the optical cable 1000, thereby protecting the internal configuration of the cable core C.

In addition, the optical cable 1000 may include an identification means 900, such as a stripe of a specific color or a protrusion, provided on a surface of the outer jacket 800, wherein the identification means 900 may perform the function of identifying the position of the notch 600 or the tension member 800, which is not visible from the outside of the optical cable 1000.

Here, once the position of the notch 600 is identified by the identification means 900, a thin part of the outer jacket 500 that must be removed to access the cable core C in a circumferential direction thereof may be recognized, allowing the outer jacket 500 to be easily removed. At this time, removing a part of the outer jacket 500 near the notch 600 to access the rib-cord 700 allows the outer jacket 500 to be subsequently removed more easily in the longitudinal direction of the optical cable 1000 using the rib-cord 700.

In addition, once the position of the tension member 800 is identified by the identification means 900, the effort required to find the position of the outer jacket 500 that must be removed to access the tension member 800 may be reduced.

Although preferred embodiments of the present invention have been described in this specification, those skilled in the art will appreciate that various changes and modifications are possible without departing from the idea and scope of the present invention recited in the appended claims. Therefore, it should be understood that such changes and modifications fall within the technical category of the present invention as long as the changes and modifications include elements described in the claims of the present invention.

**Claims**

**1.** A rollable optical fiber ribbon comprising:

a plurality of optical fibers disposed parallel to each other in a longitudinal direction, each optical fiber comprising a core, a cladding layer surrounding the core, a coating layer surrounding the cladding layer, and a coloring layer surrounding the coating layer; and

a plurality of bond regions configured to bond a pair of adjacent optical fibers, among the plurality of optical fibers, wherein

the bond regions are intermittently disposed in a longitudinal direction of the optical fiber,

the bond regions are disposed in some regions in a circumferential direction of the optical fiber, and

an arithmetic average roughness (Ra) of a surface of the coloring layer according to JIS B0601 standards is 0.15 micrometers ($\mu$m) to 0.48 micrometers ($\mu$m).

2. The rollable optical fiber ribbon according to claim 1, wherein

an outer diameter of the cladding layer is 80 micrometers ($\mu$m) to 125 micrometers ($\mu$m), and

a thickness of the coloring layer is 3.0 micrometers ($\mu$m) to 10.0 micrometers ($\mu$m).

3. The rollable optical fiber ribbon according to claim 1, wherein the bond region is formed by applying a bonding resin to a surface of the coloring layer of the optical fiber and UV-curing the resin.

4. The rollable optical fiber ribbon according to claim 1, wherein one or more bond regions have:

a density in the range of 0.8 g/cm$^3$ to 1.4 g/cm$^3$,

a tensile strength in the range of 2.0 MPa to 22 MPa,

an elongation in the range of 40% to 210%,

a secant modulus in the range of 5 MPa to 90 MPa at a strain of 2.5%, and

a viscosity in the range of 80 mPa·s to 800 mPa·s at 25°C.

5. An optical cable including the rollable optical fiber ribbon according to any one of claims 1 to 4, the optical cable comprising:

an optical unit comprising a plurality of rollable optical fiber ribbons and a first assembly member configured to accommodate the plurality of rollable optical fiber ribbons;

a cable core comprising at least one optical unit; and

an outer jacket surrounding the cable core.

6. The optical cable according to claim 5, wherein the cable core is formed by gathering a plurality of optical units.

7. The optical cable according to claim 6, comprising a second assembly member surrounding an outer circumference of the cable core.

8. The optical cable according to claim 5, comprising:

at least one notch disposed in an inner surface region of the outer jacket; and

an identification means configured to enable identification of a position of the notch.

9. The optical cable according to claim 8, wherein a rib-cord is accommodated inside the notch.

10. The optical cable according to claim 5, comprising:

at least one pair of tension members embedded in the outer jacket in a longitudinal direction of the optical cable; and

an identification means configured to enable identification of a position of the tension member.

11. A method of manufacturing an optical fiber for a rollable optical fiber ribbon comprising a plurality of optical fibers and a plurality of bond regions intermittently disposed in a longitudinal direction of the optical fiber, the method comprising:

drawing a bare optical fiber comprising a core and a clad surrounding the core from a preform;

applying a coating material to the bare optical fiber to form a coating layer;

applying a coloring material after the step of applying the coating material; and
UV-curing at least one of the coating material and the coloring material, wherein
the coloring material comprises a resin mixed with coloring pigment particles, and
an atmosphere in the step of forming the coloring layer has an oxygen concentration of more than 3,500 ppm and less than 20,000 ppm.

12. The method according to claim 11, further comprising UV-curing the coating material after the step of applying the coating material.

13. The method according to claim 11, wherein a volume ratio of oxygen to nitrogen in an atmosphere in the step of forming the coloring layer is 1:4 to 1:9.

14. The method according to claim 11, wherein an optical fiber drawing speed during UV curing is 1000 mpm to 2100 mpm, a curing time is 0.03 seconds to 0.1 seconds, and a curing degree of the coloring layer is 80% to 95%.

15. The method according to claim 11, wherein

the coating layer comprises a first coating layer surrounding the bare optical fiber in contact therewith and a second coating layer surrounding the first coating layer in contact therewith, and
a modulus of the first coating layer is lower than a modulus of the second coating layer.

【FIG. 1】

【FIG. 2】

【FIG. 3】

【FIG. 4】

【FIG. 5】

【FIG. 6】

【FIG. 7】

【FIG. 8】

【FIG. 9】